# EUROPÄISCHE PATENTANMELDUNG

(11) **EP 3 904 465 A1**
(43) Veröffentlichungstag der Anmeldung: **03.11.2021**
(21) Anmeldenummer: 21160409.5
(22) Anmeldetag: 03.03.2021
(51) Int. Cl.: C09D 5/08, C09D 7/63, C09D 179/08, C09D 183/06, F16C 33/20, C08K 3/04

(54) **GLEITLACK**

(30) Priorität: 03.03.2020 AT 501592020
(71) Anmelder: Miba Gleitlager Austria GmbH, 4663 Laakirchen (AT)
(72) Erfinder: LEONARDELLI, Georg, 4810 Gmunden (AT)
(74) Vertreter: Burger, Hannes

(57) **Zusammenfassung**

Die Erfindung betrifft einen Gleitlack umfassend zumindest ein organisches Bindemittel, zumindest einen Festschmierstoff und zumindest einen Haftvermittler zur Verbesserung der Adhäsion einer aus dem Gleitlack herstellbaren polymeren Gleitschicht (3) an einem Substrat, wobei der zumindest eine Haftvermittler zumindest einen Liganden aufweist, der den Haftvermittler mit dem organischen Bindemittel oder dem Substrat verbindet.

## Beschreibung

Die Erfindung betrifft einen Gleitlack umfassend zumindest ein organisches Bindemittel, zumindest einen Festschmierstoff und zumindest einen Haftvermittler zur Verbesserung der Adhäsion einer aus dem Gleitlack herstellbaren polymeren Gleitschicht an einem Substrat.

Die Erfindung betrifft weiter ein Gleitlagerelement umfassend zumindest eine metallische Schicht, auf der eine polymere Gleitschicht angeordnet ist.

Die Erfindung betrifft auch ein Verfahren zur Herstellung eines Gleitlagerelementes umfassend die Schritte: Bereitstellen eines Substrats mit zumindest einer metallischen Schicht; Auftragen eines Gleitlackes mit zumindest einem organischen Bindemittel und zumindest einem Haftvermittler auf die metallische Schicht; Aushärten des organischen Bindemittels.

Die Erfindung betrifft zudem die Verwendung eines Korrosionsschutzmittels.

Mehrschichtgleitlagerelement werden bekannterweise zur reibungsreduzierten Verbindung von zwei Maschinenelementen, beispielsweise zur Lagerung von sich drehendend Bauteilen, wie z.B. Wellen, eingesetzt. Dabei ist auch die Verwendung von polymerbasierten Schichten in Gleitlagerungen ist aus dem Stand der Technik hinlänglich beschrieben worden. Beispielsweise ist aus der auf die Anmelderin zurückgehenden Druckschrift EP 1 717 469 A2 ein Lagerelement bekannt, das einen metallischen Stützkörper, einer darüber angeordneten Lagermetallschicht sowie eine über dieser angeordneten Polymerschicht aufweist. Die Polymerschicht besteht aus einem Polyimidharz, Molybdändisulfid und Graphit.

Aus dem Stand der Technik ist weiter bekannt, einen Gleitlack mit einem Haftvermittler zu versetzen. So beschreibt die DD 300 385 A7 Gleitlacke, bestehend aus luft- und/oder ofentrocknenden Bindemitteln, Fluorpolymerteilchen, gegebenenfalls Pigmenten und/oder Farbstoffen, Lösungsmitteln, Benetzungsmitteln, mit denen abriebbeständige Oberflächen erhalten werden, die Überzüge mit niedrigen Reibungskoeffizienten, hoher Abriebbeständigkeit, hoher Adhäsion gegenüber dem Untergrundmaterial, antiadhäsiven Eigenschaften und guter Wasserbeständigkeit besitzen, wobei die Gleitlacke Silane der allgemeinen Formel R1-Si(OR)3, wobei R1 eine Alkenyl-, Cycloalkenyl-, Cycloalkenylalkyl- oder (Meth)acryloxialkylgruppe, R eine Alkyl- oder Alkoxialkylgruppe mit 1 bis 5 C-Atomen darstellen, enthalten.

Der Erfindung lag die Aufgabe zu Grunde, mit Gleitlacken ausgestattete Gleitlagerelemente hinsichtlich des Problems einer Delamination der Gleitlackschicht vom Untergrund zu verbessern.

Die Aufgabe der Erfindung wird mit dem eingangs genannten Gleitlack gelöst, bei dem vorgesehen ist, dass der zumindest eine Haftvermittler zumindest einen Liganden aufweist, der den Haftvermittler mit dem organischen Bindemittel oder dem Substrat verbindet.

Weiter wird die Aufgabe der Erfindung mit dem eingangs genannten Gleitlagerelement gelöst, das eine polymere Gleitschicht aus dem Gleitlack aufweist.

Die Aufgabe der Erfindung wird weiter durch das eingangs genannte Verfahren gelöst, nach dem vorgesehen ist, dass ein erfindungsgemäßer Gleitlack aufgetragen wird und der zumindest eine Haftvermittler mit der metallischen Schicht und/oder mit dem organischen Bindemittel verbunden wird.

Schließlich wird die Aufgabe der Erfindung auch durch die Verwendung eines Korrosionsschutzmittels als Haftvermittler in einem Gleitlack für ein Gleitlagerelement gelöst.

Von Vorteil ist dabei, dass mit dem Haftvermittler an sich die Haftfestigkeit der polymeren Gleitschicht auf dem Substrat verbessert werden kann, wobei durch die Anbindung des Haftvermittlers an des Substrat oder das organische Bindemittel die aus dem Gleitlack hergestellte Gleitschicht einer höheren mechanischen Belastung ausgesetzt werden kann, ohne dass die Gefahr einer Ablösung der Gleitschicht vom Substrat zu befürchten ist. Dabei kann gemäß dem Verfahren vorgesehen sein, dass die Anbindung des Haftvermittlers an das Substrat bzw. das polymere Bindemittel während der Aushärtung des Bindemittels zum Polymer erfolgen kann, womit die Herstellung der polymeren Gleitschicht aus dem Gleitlack vereinfacht werden kann, da keine zusätzlichen Verfahrensschritte für die Anbindung des Haftvermittlers an das Substrat oder das polymere Bindemittel erforderlich sind. Darüber hinaus kann auch vorgesehen sein, dass als Haftvermittler ein Korrosionsschutzmittel verwendet wird, womit die zusätzliche Funktionalität "Haftvermittler" bereits mit der Funktionalität "Korrosionsschutz" in den Gleitlack eingebracht werden kann. Das Gleitlagerelement weist damit neben der verbesserten Korrosionsbeständigkeit auch eine verbesserte Haftfestigkeit auf dem Substrat auf.

Zur weiteren Verbesserung der voranstehend genannten Effekte kann gemäß einer Ausführungsvariante der Erfindung vorgesehen sein, dass der Gleitlack sowohl einen Haftvermittler mit einem Liganden, der den Haftvermittler mit dem Substrat verbindet, als auch einen Haftvermittler mit einem Liganden, der den Haftvermittler mit dem organischen Bindemittel verbindet, aufweist.

Nach einer weiteren Ausführungsvariante der Erfindung kann vorgesehen sein, dass der Haftvermittler sowohl den Liganden, der den Haftvermittler mit dem Substrat verbindet, als auch den Liganden, der der den Haftvermittler mit dem organischen Bindemittel verbindet, aufweist. Es wird damit über den Haftvermittler eine Art Brückenbildung zur Verfügung gestellt, da mit dem Haftvermittler die polymere Gleitschicht besser an das Substrat angebunden werden kann. Hierdurch können zumindest Teile der voranstehend genannten Effekte weiter verbessert werden.

Zur Erreichung der voranstehend genannten Effekte hinsichtlich der Anbindung an das Substrat als besonders geeignet haben sich gemäß einer anderen Ausführungsvariante der Erfindung Liganden, die ausgewählt sind aus einer Gruppe bestehend aus Azolen, Silanen, Thiolen, Orthophosphaten, Thiolen, Phosphonsäuren, Sulfonsäuren.

Ebenfalls zur Erreichung der voranstehend genannten Effekte hinsichtlich der Anbindung an das Polymer als besonders geeignet haben sich gemäß einer anderen Ausführungsvariante der Erfindung Liganden, die ausgewählt sind aus einer Gruppe bestehend aus bestehend aus Imiden, Amiden, Thioamide, Thiocarbamide, Carboxylen, Silanen, Siloxanen, Aminen.

Nach weiteren Ausführungsvariante der Erfindung kann vorgesehen sein, dass
- das Azol ausgewählt ist aus einer Gruppe bestehend aus Dimercaptothiazol, Tolyltriazol, 1,3,4-Thiazol, Benzotriazole, insbesondere Benzotriazol-5-carboxylsäure, Mercaptobenzotriazole, Imidazole, insbesondere Benzimidazole, und/oder
- das Silan ein Epoxytrimethoxysilan ist, und/oder
- das Orthophosphat Trinatriumphosphat ist.

Gemäß einer anderen Ausführungsvariante der Erfindung kann vorgesehen sein, dass der Anteil des Haftvermittlers an der Gesamtzusammensetzung der polymeren Gleitschicht zwischen 0,2 Gew.-% und 5 Gew.-% beträgt. Bei einem Anteil von weniger als 0,2 Gew.-% konnte keine wesentliche Verbesserung der Haftfestigkeit der polymeren Gleitschicht auf dem metallischen Substrat beobachtet werden. Bei einem Anteil des Haftvermittlers von mehr als 5 Gew.-% werden die Anteile der restlichen Bestandteile des Gleitlackes zu sehr reduziert, wodurch die weiteren gewünschten Eigenschaften der Gleitlackschicht, wie z.B. der Zusammenhalt der Schicht an sich, also die Einbettung der Festschmierstoffpartikel, oder die Reibwertreduzierung, etc., zu sehr leiden.

In der bevorzugten Ausführungsvariante der Erfindung ist das organische Bindemittel ein Polyimid, ein Poylamidimid, ein Polyester, ein Phenolharz, insbesondere wenn die Haftvermittler entsprechend einer der voranstehend genannten Ausführungsvarianten gebildet sind.

Gemäß einer Ausführungsvariante des Gleitlagerelementes kann vorgesehen sein, dass die metallische Schicht aus einer Legierung besteht, die Kupfer enthält, da beobachtet wurde, dass der voranstehend genannte Gleitlack insbesondere bei kupferhältigen Metallschichten die voranstehend genannten Effekte zeigt.

Besonders bevorzugt wird die polymere Gleitschicht auf einem Gleitlagerelement angeordnet, bei dem sämtliche Schichten bleifrei sind, insbesondere wenn der Haftvermittler auch als Korrosionsschutzmittel wirkt.

Zum besseren Verständnis der Erfindung wird diese anhand der nachfolgenden Figuren näher erläutert.

Es zeigen jeweils in stark vereinfachter, schematischer Darstellung:

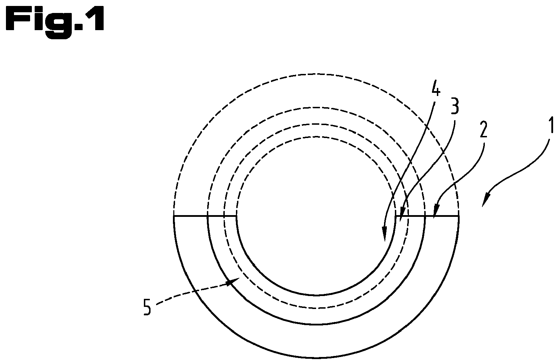

- Fig. 1: ein mehrschichtiges Gleitlagerelement in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Angaben zu den Legierungszusammensetzungen sind so zu verstehen, dass diese übliche Verunreinigungen, wie sie in großtechnisch eingesetzten Rohstoffen auftreten, mitumfassen. Es besteht aber im Rahmen der Erfindung die Möglichkeit, dass Rein- bzw. Reinstmetalle eingesetzt werden.

Weiter sind Angaben zu Zusammensetzungen in Gew.-% zu verstehen, sofern nicht etwas anderes ausdrücklich angegeben ist.

Fig. 1 zeigt ein Gleitlagerelement 1 (auch Mehrschichtgleitlagerelement bezeichenbar) in Form einer Gleitlagerhalbschale. Dargestellt ist eine zweischichtige Variante des Gleitlagerelements 1, bestehend aus einer Stützschicht 2 und einer Gleitschicht 3, die auf einer Vorderseite 4 (radial inneren Seite) des Gleitlagerelements 1, die einem zu lagernden Bauteil zuwendbar ist, angeordnet ist.

Gegebenenfalls kann eine Lagermetallschicht 5 zwischen der Gleitschicht 3 und der Stützschicht 2 angeordnet sein, wie dies in Fig. 1 strichliert angedeutet ist.

Der prinzipielle Aufbau derartiger Gleitlagerelemente 1, wie sie z.B. in Verbrennungskraftmaschinen Verwendung finden, ist aus dem Stand der Technik bekannt, sodass sich weitere Ausführungen hierzu erübrigen. Es sei jedoch erwähnt, dass weitere Schichten angeordnet werden können, also beispielsweise zwischen der Lagermetallschicht 5 und der Stützmetallschicht eine Haftvermittlerschicht und/oder eine Diffusionssperrschicht, etc.

Im Rahmen der Erfindung kann das Mehrschichtgleitlager 1 auch anders ausgeführt sein, beispielsweise als Lagerbuchse, wie dies in Fig. 1 strichliert angedeutet ist. Ebenso sind Ausführungen wie Anlaufringe, axial laufende Gleitschuhe, oder dergleichen möglich.

Die Gleitschicht 3 ist vorzugsweise auf einer metallischen Schicht des Gleitlagerelementes 1 angeordnet, die Kupfer enthält. Insbesondere ist die Gleitschicht unmittelbar auf dieser Schicht angeordnet.

Der Ausdruck "Kupfer enthält" umfasst dabei Legierungen, die Kupfer als Legierungsbestandteil enthalten, Kupferbasislegierungen, bei denen Kupfer die Matrix bildet, in der weitere Phasen der Kupferbasislegierung eingelagert bzw. angeordnet sind, sowie Schichten, die nur aus Kupfer gebildet sind. Vorzugswiese ist die Gleitschicht 3 aber (unmittelbar) auf eine Kupferbasislegierung angeordnet bzw. damit verbunden.

Es ist weiter bevorzugt, wenn sämtliche Schichten des Gleitlagerelementes 1 bleifrei ausgebildet sind. Mit "bleifrei" ist dabei gemeint, dass diese Schichten vorzugsweise kein Blei aufweisen. Zumindest eine der Schichten kann jedoch einen maximalen Bleianteil in Höhe der üblichen Verunreinigungen, die die Elemente üblicherweise aufweisen, die für die Herstellung der jeweiligen Schicht des Gleitlagerelementes 1, eingesetzt werden, aufweisen. Dieser Bleianteil kann beispielsweise aus dem Recycling von Metallen stammen. Üblicherweise ist dieser Bleianteil in der jeweiligen Schicht des Gleitlagerelementes 1 nicht höher als 0,1 Gew.-%. Jedenfalls wird in der bevorzugten Ausführungsvariante des Gleitlagerelementes 1 kein Blei extra als Legierungsbestandteil zugesetzt.

Die Stützschicht 2 kann aus Stahl bestehen, kann aber auch aus einem anderen Werkstoff, der dem Gleitlagerelement 1 die erforderliche Strukturfestigkeit verleiht, bestehen. Derartige Werkstoffe sind aus dem Stand der Technik bekannt. Beispielsweise kann die Stützschicht 2 aus einer Kupferbronze bestehen.

Falls die Gleitschicht 3 nicht unmittelbar auf der Stützschicht 3 angeordnet ist, kann die Lagermetallschicht 5 eine Kupferenthaltende Schicht sein, auf der die Gleitschicht 3 angeordnet ist.

Es besteht weiter die Möglichkeit, dass zwischen der Lagermetallschicht 5 und der Gleitschicht 3 eine weitere Gleitschicht angeordnet ist. Diese weitere Gleitschicht ist dann eine metallische Gleitschicht, die vorzugsweise eine Kupfer enthaltende Schicht ist. In diesem Fall kann die auf der weiteren Gleitschicht angeordnete Gleitschicht 3 (auch) die Funktion einer Einlaufschicht haben.

Für die Lagermetallschicht 5 sowie die Zwischenschichten können (auch) die aus dem einschlägigen Stand der Technik bekannten Legierungen bzw. Werkstoffe verwendet werden, und sei diesbezüglich darauf verwiesen.

Die Gleitschicht 3 ist eine polymerbasierte Schicht, die aus einem Gleitlack gebildet wird.

Der Gleitlack kann in fester Form oder vorzugsweise in flüssiger Form vorliegen und auf das jeweilige Substrat aufgetragen werden. Die Verfahren zum Auftragen sind bekannt und müssen daher nicht weiter vertieft werden. Der Gleitlack kann beispielsweise aufgestrichen, aufgesprüht, aufgetaucht, etc., werden.

Der Gleitlack umfasst zumindest ein organisches Bindemittel, zumindest einen Festschmierstoff und zumindest einen Haftvermittler zur Verbesserung der Adhäsion der aus dem Gleitlack herstellbaren polymeren Gleitschicht 3 an einem Substrat. Daneben kann der Gleitlack auch noch zumindest einen weiteren Bestandteil aufweisen, wie beispielsweise Hartpartikel, Metallpartikel, zumindest ein Lösungsmittel, Farbstoffe, etc.

Das organische Bindemittel bzw. die polymere Basis ist bevorzugt ein Polyimid, ein Poylamidimid, ein Polyester, ein Phenolharz. Es können aber auch andere organische Bindemittel auf organischer Basis eingesetzt werden, wie beispielsweise Epoxide oder Polybenzimidazol (PBI). Ebenso sind Mischungen aus zumindest zwei der genannten Polymere sowie Modifikationen dieser Polymere als organisches Bindemittel einsetzbar.

Das organische Bindemittel liegt im Gleitlack in nicht ausgehärteter (und bevorzugt gelöster) Form als Monomer bzw. generell als Vorstufe(n) des Polymers vor. Beim Aushärten bzw. durch das Aushärten wird das Polymer gebildet.

Das Polyimidpolymer kann beispielsweise ausgewählt sein aus einer Gruppe umfassend oder bestehend aus Polyimid (PI), Polysuccinimid (PSI), Polybismaleinimid (PBMI), Polybenzimidazol (PBI), Polyoxadiazobenzimidazol (PBO) und Polyimidsulfon (PISO) sowie Mischungen daraus.

Bevorzugt ist das Polymer ein Polyamidimid. Das Polyamidimid kann zumindest teilweise aromatische Gruppen aufweisen bzw. kann es ein vollaromatischen Polyamidimid sein.

Der Anteil des polymeren Bindemittels an der aus dem Gleitlack herstellbaren Polymerschicht, insbesondere der Gleitschicht 3, ist bevorzugt ausgewählt aus einem Bereich mit einer unteren Grenze von 25 Gew.-% und einer oberen Grenze von 50 Gew.-%, insbesondere einer unteren Grenze von 30 Gew.-% und einer oberen Grenze von 45 Gew.-%. Besonders bevorzugt beträgt der Anteil des Bindemittels an dem Polymerschicht 37 Gew.-%.

Es sei an dieser Stelle erwähnt, dass durch die Härtung bzw. beim Härten des Gleitlackes, das Lösungsmittel entfernt wird. Die Zusammensetzung des Gleitlacks kann daher zur Zusammensetzung der Polymerschicht unterschiedlich sind, wenn der Gleitlack ein Lösungsmittel enthält. In diesem Fall ist der Lösungsmittelanteil am Gleitlack zu berücksichtigen.

Es sei in diesem Zusammenhang auch darauf hingewiesen, dass selbstverständlich sämtliche Angaben zur Zusammensetzung der Polymerschicht bzw. des Gleitlacks so zu verstehen sind, dass die Summe der Mengenanteile aller Bestandteile der Polymerschicht bzw. des Gleitlacks 100 Gew.-% ergeben muss. Die Polymer-schicht bzw. der Gleitlack kann daher auch aus den in dieser Beschreibung genannten Bereichen ausgewählte Zusammensetzungen aufweisen.

Die Festschmierstoffpartikel können ausgewählt sein aus einer Gruppe umfassend oder bestehend aus Graphit, MoS2, WS2, Sn, SnS und SnS2, ZnS, ZnS2, hexagonales BN, Sn-Legierungen, CF2, PbF2, PTFE, etc. Ebenso sind Mischungen aus zwei oder mehreren verschiedenen Festschmierstoffpartikeln einsetzbar. Prinzipiell sind diese Festschmierstoffe bereits aus dem Stand der Technik hinlänglich für diesen Verwendungszweck bekannt.

Der Gesamtanteil der Festschmierstoffpartikel an der aus dem Gleitlack herstellbaren Polymerschicht, insbesondere der Gleitschicht 3, kann ausgewählt sein aus einem Bereich mit einer unteren Grenze von 25 Gew.-% und einer oberen Grenze von 60 Gew.-%, insbesondere aus einem Bereich mit einer unteren Grenze von 40 Gew.-% und einer oberen Grenze von 60 Gew.-%. Besonders bevorzugt beträgt der Gesamtanteil der Festschmierstoffpartikel an der Polymerschicht zwischen 50 Gew.-% und 55 Gew.-%.

Die Festschmierstoffpartikel können eine maximale Partikelgröße D90 von 40 µm aufweisen.

Unter der maximalen Partikelgröße wird dabei jene Abmessung eines Partikels verstanden, die im Vergleich zu anderen Abmessungen desselben Partikels am größten ist. Die maximale Abmessung kann also auch als der Durchmesser jener Hüllkugel verstanden werden, die das jeweilige Partikel gerade vollständig umhüllt.

Insbesondere können die Festschmierstoffpartikel eine Partikelgrößenverteilung (Korngrößenverteilung) von D50 = 3 µm bis 15 µm, gemessen mittels Siebanalyse, aufweisen.

In der bevorzugten Ausführungsvariante enthält der Gleitlack, und damit auch die Polymerschicht, Graphit und MoS2 als Festschmierstoffpartikel. Der Anteil an Graphit an der Polymerschicht kann dabei ausgewählt sein aus einem Bereich mit einer unteren Grenze von 0,1 Gew.-% und einer oberen Grenze von 20 Gew.-%, insbesondere aus einem Bereich mit einer unteren Grenze von 5 Gew.-% und einer oberen Grenze von 15 Gew.-%. Besonders bevorzugt beträgt der Anteil von Graphit an der Polymerschicht 8 Gew.-%. Das MoS₂ bildet den Rest des voranstehend genannten Gesamtanteils an Festschmierstoffen an der Polymerschicht.

Die Polymerschicht bzw. der Gleitlack kann Hartpartikel aufweisen, um die Härte der Polymerschicht anpassen zu können. Diese Hartpartikel können ausgewählt sein aus einer Gruppe umfassend oder bestehend aus Metalloxidpartikel, wie CrO₃, Fe3O₄, ZnO, CdO, Al₂O₃, SiO₂, MnO, TiO₂, Mischoxidpartikel, wie Bismutvanadate (BiVO4), Chrom-Antimon-Rutile, Ton, Talk, Aluminiumsilikate, wie z.B. Mullit, Magnesiumsilikate, wie z.B. Amosit, Antophyllit, Chrysotil, Carbide, wie z.B. SiC, CaC₂, Mo₂C, WC, Metallpartikel, wie z.B. Al, Ag, Sn, Zn, Ag, Ba, Bronze, Cd, Co, Cu, In, Legierungspartikel von diesen Metallen, Metallnitride, wie Si3N₄, AlN, Fe₃P, Metallboride, wie z.B. Fe₂B, Ni₂B, FeB, BaSO₄, chlorinierte Hydrogencarbonate, Fluoride, wie z.B. CaF₂, Metalloxifluoride, Crocidolit, Tremolit, Silizide, Thiophosphate, wie z.B. Zinkthiophosphat.

Es sind auch Mischungen unterschiedlicher Zusatzstoffe bzw. Hartstoffe, beispielsweise von zwei, drei, vier oder mehreren unterschiedlichen Zusatzstoffen bzw. Hartstoffen verwendbar.

Der Anteil der Hartpartikel an der Polymerschicht kann ausgewählt sein aus einem Bereich mit einer unteren Grenze von 1 Gew.-% und einer oberen Grenze von 20 Gew.-%, insbesondere aus einem Bereich mit einer unteren Grenze von 1 Gew.-% und einer oberen Grenze von 5 Gew.-%.

Das gegebenenfalls im Gleitlack vorhandene Lösungsmittel kann ausgewählt sein aus einer Gruppe umfassend bzw. bestehend aus Xylol, Dimethylformamid, Methylethylketon, Gamma-Butyrolacton, Dimethylacetamid, N-Methyl-2-pyrrolidon, 1-Butylpyrrolidin-2-on, etc. Es sind auch Mischungen aus zumindest zwei verschiedenen Lösungsmitteln verwendbar.

Der Anteil des zumindest einen Lösungsmittels am Gleitlack kann ausgewählt sein aus einem Bereich mit einer unteren Grenze von 50 Gew.-% und einer oberen Grenze von 80 Gew.-%, insbesondere aus einem Bereich mit einer unteren Grenze von 60 Gew.-% und einer oberen Grenze von 70 Gew.-%. Vorzugsweise kann der Anteil des Lösungsmittels am Gleitlack 65 Gew.-% betragen.

Der Gleitlack (und damit auch die Polymerschicht) kann noch weitere Bestandteile aufweisen, beispielsweise Fasern, Metallplättchen, etc. Der Anteil an diesen weiteren Bestandteilen kann zwischen 0,1 Gew.-% und 20 Gew.-% betragen.

Wie bereits voranstehend ausgeführt weist der Gleitlack und damit auch die daraus hergestellte Polymerschicht, insbesondere die Gleitschicht 3, zumindest einen Haftvermittler auf. Der Haftvermittler wird/ist mit dem organischen, polymeren Bindemittel oder mit dem (metallischen) Substrat, auf das der Gleitlack aufgebracht wird, verbunden. Die Verbindung ist insbesondere in Art einer koordinativen Bindung (Donor-Akzeptor-Bindung) hinsichtlich der Anbindung an das polymere Bindemittel und hinsichtlich der Anbindung an das Substrat ausgebildet. Es sind jedoch auch andere Anbindungen möglich, wie beispielsweise eine kovalente Anbindung an das polymere Bindemittel. Dazu weist das zumindest eine Haftmittel entsprechende Liganden auf, die im nachfolgenden noch näher erläutert werden.

Es sei in diesem Zusammenhang darauf hingewiesen, dass unter einem Liganden sowohl eine chemische Verbindung an sich, also auch eine besondere chemische Gruppe (auch als "reaktive Gruppe" bezeichenbar) im Molekül des Haftvermittlers, die mit dem Bindemittel oder dem Substrat reagieren kann bzw. reagiert, verstanden wird. Beispielsweise kann die Verbindung "Benzotriazol" den Liganden "Carboxylsäure", der die Verbindung zum Polymer herstellt, aufweisen. Der Haftvermittler lautet dann Benzotriazol-5-carboxylsäure. Oder die Verbindung "Undecan" kann mit dem Liganden Thiol als Haftvermittler und dem Liganden Carboxyl als Verbindung zum Bindemittel versehen sein, woraus 11-Mercaptoundecansäure als zugegebenen Substanz resultiert. Für den Fall, dass der Ligand eine reaktive Gruppe ist, kann vorgesehen sein, dass das Trägermolekül, das den Liganden trägt, eine organische Verbindung mit einer Molmasse von maximal 200 g/mol, bevorzugt maximal 150 g/mol insbesondere maximal 100 g/mol, ist. Die untere Grenze dieser Bereiche ist bevorzugt jeweils 20 g/mol. Beispielsweise kann das Trägermolekül Phenol, ein Alkan, wie z.B. Butan, Undecan, etc., sein.

Nach einer Ausführungsvariante der Erfindung kann auch vorgesehen sein, dass der Gleitlack sowohl einen Haftvermittler mit einem Liganden, der diesen Haftvermittler mit dem Substrat verbindet, als auch einen Haftvermittler mit einem Liganden, der diesen Haftvermittler mit dem organischen Bindemittel verbindet, aufweist. Damit wird die polymere Schicht einerseits mit dem Substrat und andererseits mit dem Bindemittel (d.h. den Molekülen des Bindemittels) verbunden, wobei jedoch keine durchgehende Verbindung der Bindemittelmoleküle mit dem Substrat vorhanden ist.

Um dies zu erreichen, kann nach einer weiteren Ausführungsvariante der Erfindung vorgesehen sein, dass der Haftvermittler zumindest zwei verschiedene Liganden trägt, wobei einer dieser Liganden mit dem Substrat, und der weitere Ligand mit dem Bindemittel bindet. Damit kann also über den Haftvermittler eine direkte Anbindung des Bindemittels an das Substrat erreicht werden.

Der Anteil des Haftvermittlers (bzw. der Summenanteil an Haftvermittlern bei mehreren Haftvermittlern) an der Gesamtzusammensetzung der aus dem Gleitlack herstellbaren Polymerschicht (Gleitschicht 3) beträgt bevorzugt zwischen 0,2 Gew.-% und 5 Gew.-%, insbesondere zwischen 0, 5 Gew.-% und 2,5 Gew.-%. Beispielsweise kann der Anteil des Haftvermittlers an der Gesamtzusammensetzung der Polymerschicht zwischen 1,8 Gew.-% und 2,2 Gew.-% betragen. Der Anteil des Haftvermittlers im Gleitlack mit Lösungsmittel kann aus diesen Werten unter Berücksichtigung des Lösungsmittelanteils errechnet werden. Dazu wird die Zusammensetzung der aus dem Gleitlack herzustellenden Polymerschicht entsprechend den Angaben in dieser Beschreibung herangezogen. Diese Zusammensetzung muss im ersten Schritt einen Summenanteil von 100 Gew.-% ergeben. Zu dieser Zusammensetzung wird danach der Lösungsmittelanteil hinzugerechnet, wodurch sich der Anteil der einzelnen Bestandteile der vorher bestimmten Zusammensetzung im Gleitlack mit Lösungsmittel entsprechen dem Lösungsmittelanteil reduziert. Da dies dem Fachmann bekannt ist, muss dies nicht weiter erläutert werden.

Gemäß Ausführungsvarianten der Erfindung kann vorgesehen sein, dass der Ligand (also in diesem Fall die reaktive Gruppe), der den Haftvermittler mit dem Substrat verbindet, ausgewählt ist aus einer Gruppe bestehend aus Azolen, Silanen, Thiolen, Orthophosphaten, Thiolen, Phosphonsäuren, Sulfonsäuren, und/oder dass der Ligand (also auch in diesem Fall die reaktive Gruppe), der den Haftvermittler mit dem Polymer verbindet, ausgewählt ist aus einer Gruppe bestehend aus Imiden, Amiden, Thioamide, Thiocarbamide, Carboxylen, Silanen, Siloxanen, Aminen, Vinylen, Methacrylaten, Epoxiden, Carbamiden, Titanaten und Zirkonaten.

Das Azol kann ausgewählt sein aus einer Gruppe umfassend oder bestehend aus Dimercaptothiazol, Tolyltriazol, 1,2,4-Thiazol, Benzotriazole, insbesondere Benzotriazol-5-carboxylsäure, Mercaptobenzotriazole, Imidazole, insbesondere Benzimidazole.

Das Silan kann ein Epoxytrimethoxysilan sein.

Das Orthophosphat kann Trinatriumphosphat sein.

Beispielsweise kann der Haftvermittler 5-Amino-1,3,4-Thiadiazol-2-Thiol und/oder 3-Aminopropyltriethoxysilane und/oder (Benzothiazol-2-ylthio)-Succinylsäure und/oder 11-Mercaptoundecansäure und/oder 2-(2H-Benzotriazol-2-yl)-4,6-bis-(1-Phenylethyl-1-Methyl)-Phenol und/oder Benzotriazol-5-Carboxylsäure und/oder Epoxytrimethoxysilan und/oder 5-Amino-5-Mercapto-1,3,4-Thiazol und/oder Benzotriazol-1-Carboxamid und/oder 5-Benzimidazolcarboxylsäure sein.

In folgender Tabelle 1 sind einige der Zusammensetzungen wiedergegeben, die im Zuge der Erfindung erprobt wurden. Es sei jedoch erwähnt, dass auch mit den weiteren genannten Liganden entsprechende Versuche durchgeführt wurden, deren Wiedergabe aber den Rahmen dieser Beschreibung sprengen würden.

Alle diese Zusammensetzungen zeigten auf dem Lagerprüfstand mit oszillierender Relativbewegung bzw. unter steigender Last eine Verbesserung der Haftung gegenüber den gleichen Zusammensetzungen ohne Haftvermittler.

Sämtliche Mengenanteile sind in Gew.-% zu verstehen. Weiter beziehen sich die Angaben zu Zusammensetzung auf die Zusammensetzung der aus dem Gleitlack hergestellten Polymerschicht, d.h. ohne Lösungsmittel.

**Tabelle 1: Zusammensetzungen der aus dem Gleitlack hergestellten Polymerschicht:**

| **Haftvermittler** | **Anteil** | **Polymer** | **Anteil** | **MoS₂** | **Graphit** | **Hartstoff / Fasern / Metalle** |
|---|---|---|---|---|---|---|
| 5-Amino-1,3,4-thiadiazol-2-thiol | 2,0 | PAI | 50 | 29 | 1 | 18 |
| 3-Aminopropyltriethoxysilan | 1,0 | PAI | 43 | 40 | 14 | 2 |
| (Benzothiazol-2-ylthio)succinylsäure | 1,0 | PAI | 38 | 44 | 15 | 2 |
| 11-Mercaptoundecansäure | 1,5 | 75 PAI + 25 PI | 25 | 38,5 | 20 | 15 |
| 2-(2H-benzotriazol-2-yl)-4,6-bis-(1-phenylethyl-1-methyl)phenol | 0,5 | PAI | 40 | 49,5 | 10 | |
| 5-Benzimidazolcarboxylsäure | 1,5 | 75 PAI + 25 PI | 40 | 43,5 | 15 | |
| Epoxytrimethoxysilan | 1,5 | 75 PAI + 25 Epoxy | 45 | 35,5 | 8 | 10 |
| 5-Amino-5-Mercapto-1,3,4-Thiazol | 4,0 | PAI | 35 | 36 | 17 | 8 |
| Benzotriazole-5-carboxylsäure | 2,0 | PAI | 39 | 48 | 8 | 3 |
| Benzotriazole- 1 -carboxamid | 3,0 | 75 PAI + 25 PBI | 42 | 38 | 15 | 2 |
| 5-Amino-1,3,4-thiadiazol-2-thiol | 0,2 | PAI | 25 | 59 | | 15,8 |
| 5-Amino-1,3,4-thiadiazol-2-thiol | 5 | PAI | 50 | 45 | | |
| 5-Amino-1,3,4-thiadiazol-2-thiol | 0,2 | PAI | 50 | 25 | 10 | 14,8 |
| 5-Amino-1,3,4-thiadiazol-2-thiol | 5 | PAI | 45 | 60 | | |
| 5-Amino-1,3,4-thiadiazol-2-thiol | 0,2 | PAI | 50 | 49 | | 0,8 |
| 5-Amino-1,3,4-thiadiazol-2-thiol | 5 | PAI | 25 | 45 | 14 | 11 |
| 5-Amino-1,3,4-thiadiazol-2-thiol | 0,2 | PAI | 39,8 | 60 | | |
| 5-Amino-1,3,4-thiadiazol-2-thiol | 5 | PAI | 50 | 25 | | 20 |
| 5-Amino-1,3,4-thiadiazol-2-thiol | 0,2 | PAI | 42,8 | 35 | 22 | |
| 5-Amino-1,3,4-thiadiazol-2-thiol | 5 | PAI | 60 | 12 | 20 | 3 |
| 5-Amino-1,3,4-thiadiazol-2-thiol | 0,2 | PAI | 56,8 | 5 | 20 | 18 |
| 5-Amino-1,3,4-thiadiazol-2-thiol | 5 | PAI | 52 | 20 | 5 | 18 |
| 5-Amino-1,3,4-thiadiazol-2-thiol | 0,2 | PAI | 37,5 | 52,3 | | 10 |
| 5-Amino-1,3,4-thiadiazol-2-thiol | 5 | PAI | 37,5 | 27,5 | 20 | 10 |

Für die Herstellung eines Gleitlagerelements wird in einem ersten Schritt ein ein- oder mehrschichtiges Substrat zur Verfügung gestellt. Diese kann nach (in der Gleitlagerindustrie) üblichen, bekannten Verfahren hergestellt werden. Auf dieses Substrat wird in der Folge der Gleitlack aufgetragen, beispielsweise mit einem voranstehend genannten Verfahren. Nach dem Aufbringen des Haftvermittlers wird dieser ausgehärtet. Dies kann beispielsweise durch Wärmebehandlung, UV Licht, Infrarot-Bestrahlung, etc. erfolgen. Die Aushärtung von Gleitlacken an sich ist dem Fachmann bekannt. Mit der Aushärtung wird die aus dem Gleitlack hergestellte Polymerschicht mit dem Substrat, insbesondere einer metallischen Schicht, und/oder mit dem organischen Bindemittel verbunden.

Die Erfindung betrifft auch die Verwendung eines Korrosionsschutzmittels als Haftvermittler in einem Gleitlack für ein Gleitlagerelement, wobei das Korrosionsschutzmittel aus den voranstehend genannten Liganden ausgewählt ist.

Die Ausführungsbeispiele zeigen bzw. beschreiben mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Gleitlagerelementes 1 dieses nicht notwendigerweise maßstäblich dargestellt ist.

### Bezugszeichenaufstellung

- 1: Gleitlagerelement
- 2: Stützschicht
- 3: Gleitschicht
- 4: Vorderseite
- 5: Lagermetallschicht

## Patentansprüche

1. Gleitlack umfassend zumindest ein organisches Bindemittel, zumindest einen Festschmierstoff und zumindest einen Haftvermittler zur Verbesserung der Adhäsion einer aus dem Gleitlack herstellbaren polymeren Gleitschicht (3) an einem Substrat, **dadurch gekennzeichnet, dass** der zumindest eine Haftvermittler zumindest einen Liganden aufweist, der den Haftvermittler mit dem organischen Bindemittel oder dem Substrat verbindet.

2. Gleitlack nach Anspruch 1, **dadurch gekennzeichnet, dass** dieser sowohl einen Haftvermittler mit einem Liganden, der den Haftvermittler mit dem Substrat verbindet, als auch einen Haftvermittler mit einem Liganden, der den Haftvermittler mit dem organischen Bindemittel verbindet, aufweist.

3. Gleitlack nach Anspruch 2, **dadurch gekennzeichnet, dass** der Haftvermittler sowohl den Liganden, der den Haftvermittler mit dem Substrat verbindet, als auch den Liganden, der der den Haftvermittler mit dem organischen Bindemittel verbindet, aufweist.

4. Gleitlack nach einem der Ansprüche 1 bis 3, **dadurch gekennzeichnet, dass** der Ligand, der den Haftvermittler mit dem Substrat verbindet, ausgewählt ist aus einer Gruppe bestehend aus Azolen, Silanen, Thiolen, Orthophosphaten, Thiolen, Phosphonsäuren, Sulfonsäuren.

5. Gleitlack nach einem der Ansprüche 1 bis 4, **dadurch gekennzeichnet, dass** der Ligand, der den Haftvermittler mit dem Polymer verbindet, ausgewählt ist aus einer Gruppe bestehend aus Imiden, Amiden, Thioamide, Thiocarbamide, Carboxylen, Silanen, Siloxanen, Aminen.

6. Gleitlack nach Anspruch 4, **dadurch gekennzeichnet, dass** das Azol ausgewählt ist aus einer Gruppe bestehend aus Dimercaptothiazol, Tolyltriazol, 1,3,4-Thiazol, Benzotriazole, insbesondere Benzotriazol-5-carboxylsäure, Mercaptobenzotriazole, Imidazole, insbesondere Benzimidazole.

7. Gleitlack nach Anspruch 4, **dadurch gekennzeichnet, dass** das Silan ein Epoxytrimethoxysilan ist.

8. Gleitlack nach Anspruch 4, **dadurch gekennzeichnet, dass** das Orthophosphat Trinatriumphosphat ist.

9. Gleitlack nach einem der Ansprüche 1 bis 8, **dadurch gekennzeichnet, dass** das organische Bindemittel eine Polyimid, eine Poylamidimid, ein Polyester, ein Phenolharz ist.

10. Gleitlagerelement (1) umfassend zumindest eine metallische Schicht, auf der eine polymere Gleitschicht (3) angeordnet ist, **dadurch gekennzeichnet, dass** die polymere Gleitschicht (3) aus einem Gleitlack entsprechend einem der voranstehenden Ansprüche hergestellt ist.

11. Gleitlagerelement nach Anspruch 10, **dadurch gekennzeichnet, dass** der Anteil des Haftvermittlers an der Gesamtzusammensetzung der polymeren Gleitschicht zwischen 0,2 Gew.-% und 5 Gew.-%, insbesondere zwischen 0,5 Gew.-% und 2,5 Gew.-%, beträgt.

12. Gleitlagerelement (1) nach Anspruch 10 oder 11, **dadurch gekennzeichnet, dass** die metallische Schicht aus einer Legierung besteht, die Kupfer enthält.

13. Gleitlagerelement (1) nach Anspruch 10 bis 12, **dadurch gekennzeichnet, dass** sämtliche Schichten des Gleitlagerelementes (1) bleifrei sind.

14. Verfahren zur Herstellung eines Gleitlagerelementes (1) umfassend die Schritte:
- Bereitstellen eines Substrats mit zumindest einer metallischen Schicht;
- Auftragen eines Gleitlackes mit zumindest einem organischen Bindemittel und zumindest einem Haftvermittler auf die metallische Schicht;
- Aushärten des organischen Bindemittels,
**dadurch gekennzeichnet, dass** als Gleitlack ein Gleitlack nach einem der Ansprüche 1 bis 11 aufgetragen wird und dass der zumindest eine Haftvermittler mit der metallischen Schicht und/oder mit dem organischen Bindemittel verbunden wird.

15. Verwendung eines Korrosionsschutzmittels als Haftvermittler in einem Gleitlack für ein Gleitlagerelement (1).
